# EUROPÄISCHE PATENTSCHRIFT

(11) **EP 3 957 570 B1**
(45) Veröffentlichungstag und Bekanntmachung des Hinweises auf die Patenterteilung: **11.10.2023**
(21) Anmeldenummer: 21191392.6
(22) Anmeldetag: 13.08.2021
(51) Int. Cl.: B65B 69/00, B65B 1/28, B25J 21/02

(54) **VORRICHTUNG ZUM BEFÜLLEN UND/ODER ENTLEEREN EINES BEHÄLTERS**
DEVICE FOR FILLING AND / OR EMPTYING A CONTAINER
DISPOSITIF DE REMPLISSAGE ET/OU DE VIDANGE D'UN RÉCIPIENT

(30) Priorität: 20.08.2020 DE 102020210615; 15.10.2020 DE 102020127213
(43) Veröffentlichungstag der Anmeldung: 23.02.2022
(73) Patentinhaber: Hecht Technologie GmbH, 85276 Pfaffenhofen (DE)
(72) Erfinder: Poth, Hans-Joachim, 85276 Pfaffenhofen/Ilm (DE); Schwaiger, Thomas, 85276 Pfaffenhofen/Ilm (DE); Schauer, Wolfgang, 85276 Pfaffenhofen/Ilm (DE)
(74) Vertreter: Kilian Kilian & Partner mbB

(56) Entgegenhaltungen:
- EP-A2- 1 958 900
- WO-A1-2015/027350
- DE-A1-102008 001 752

## Beschreibung

Die Erfindung betrifft eine Vorrichtung zum Befüllen von Behältern mit einem pulver-/granulatförmigen Produkt und/oder zum Entleeren solcher Behälter, insbesondere zum Befüllen und/oder Entleeren von Fässern oder Bigbags.

Im Stand der Technik sind Vorrichtungen zum Befüllen oder Entleeren von Behältern, wie beispielsweise Fässer oder Bigbags, allgemein bekannt. Beispielsweise zeigen die Patentdokumente DE 10 2017 212 510 A1 oder DE 10 2006 057 760 A1 solche Vorrichtungen, die ein kontaminationsfreies Befüllen oder Entleeren von Behältern zulassen. Dokument WO2015/027350 offenbart auch eine ähnliche Befüllen oder Entleeren Transfereinheit.

Die aus dem Stand der Technik bekannten Vorrichtungen beinhalten im Wesentlichen einen Grundkörper, der einen Kanal festlegt, einen seitlichen Eingriff und eine Befestigungseinrichtung, die an dem dem entsprechenden Behälter zugewandten Ende des Grundkörpers vorgesehen ist.

Der handzuhabende Behälter wird an die Vorrichtung angeschlossen, indem der Anwender eine an dem Behälter vorgesehene schlauchförmige Folie an der Befestigungseinrichtung festklemmt.

Die schlauchförmige Folie kann Teil des Behälters sein, wie beispielsweise bei Bigbags, oder eine gesonderte schlauchförmige Folie, die einerseits an dem Behälter, wie beispielsweise einem Fass, und andererseits an der genannten Befestigungseinrichtung befestigt wird. Nach Befüllen/Entleeren des Behälters durchtrennt der Anwender die schlauchförmige Folie, wobei ein entsprechender Folienrest an dem Grundkörper verschlossen und festgeklemmt verbleibt.

Bei einem nachfolgenden Behälter schließt die schlauchförmige Folie den Folienrest ein. Um den Strömungsweg freizumachen, greift der Anwender durch den Eingriff hindurch in den Grundkörper ein und entfernt den Folienrest, indem er ihn durch den seitlichen Eingriff hindurch aus dem Grundkörper herauszieht.

Damit der gesamte Prozess (Entleeren und/oder Befüllen) für mehrere Behälter zyklisch und dabei kontaminationsfrei erfolgt, ist bei den bekannten Vorrichtungen neben der überbrückenden schlauchförmigen Folie, die den Folienrest des vorangehenden Behälters einschließt, ein Folienvorrat (Endlosschlauchfolie) an dem seitlichen Eingriff vorgesehen.

Der Folienvorrat ermöglicht es dem Anwender, einen zugewandten und verschlossenen Folienabschnitt bestimmter Länge aus dem Folienvorrat herauszuziehen und diesen als Eingreifschlauch zur Entfernung des Folienrestes zu verwenden.

Der verwendete Folienvorrat beinhaltet Schlauchfolie für ca. 20 Zyklen. Anschließend muss der Anwender einen neuen Folienvorrat an dem seitlichen Eingriff befestigen.

Der Wechsel des Folienvorrats erfordert nicht unerheblich Zeit und vermindert deshalb die Anzahl der handzuhabenden Behälter pro Zeiteinheit. Darüber hinaus produziert die Nutzung des Folienvorrats Müll, der unter Umständen speziell entsorgt werden muss.

Alternativ ist es bekannt, anstatt des Folienvorrates einen einfachen Foliensack an dem seitlichen Eingriff vorzusehen. Der Foliensack fungiert als Eingreifschlauch und wird pro Entleer- bzw. Befüllvorgang gewechselt. Die erläuterten Probleme beseitigt diese Alternative nicht.

Vor diesem Hintergrund ist es Aufgabe der Erfindung, eine Vorrichtung zum Befüllen und/oder Entleeren von Behältern zu schaffen, die eine Menge notwendiger Schlauchfolie vermindert und höhere Prozesstakte (Behälter pro Zeiteinheit) zulässt. Zumindest ist es Aufgabe der Erfindung, eine zum Stand der Technik alternative Vorrichtung zu schaffen.

Diese Aufgabe wird mit einer Vorrichtung gemäß Patentanspruch 1 gelöst. Bevorzugte Ausführungsformen sind Gegenstand der abhängigen Patentansprüche.

*Gemäß einem Aspekt beinhaltet die erfindungsgemäße Vorrichtung zum Befüllen und*/*oder Entleeren eines ein pulver-*/*granulatförmiges Produkt enthaltenen Behälters folgende Merkmale: einen Grundkörper, der einen Kanal ausbildet, wobei der Kanal sich entlang einer Kanalachse erstreckt; und eine Befestigungseinrichtung zur Befestigung einer schlauchförmigen Folie an dem Grundkörper, derart, dass das pulver-*/*granulatförmige Produkt über den Kanal und die schlauchförmige Folie in und*/*oder aus dem Behälter kontaminationsfrei überführbar ist.*

Der Grundkörper ist beispielsweise aus einem Metall oder einem Kunststoff ausgebildet und wird bestimmungsgemäß in eine Prozessanlage, in die und/oder aus der das Produkt strömt/überführt wird, integriert. Hierfür ist bestimmungsgemäß an einem Ende des Grundkörpers beispielsweise ein Befestigungsflansch ausgebildet, der mit der Prozessanlage so verbunden wird, dass das pulver-/granulatförmige Produkt aus der Prozessanlage in den Kanal oder aus diesem in die Prozessanlage eintreten kann.

Des Weiteren beinhaltet die Vorrichtung *einen seitlichen rigiden Eingriffsabschnitt, der an dem Grundkörper ausgebildet ist und sich radial*/*quer zu der Kanalachse erstreckt, wobei an einem dem Grundkörper abgewandten Ende des Eingriffsabschnittes ein flexibler Eingreifschlauch befestigt ist, über den ein Anwender nach Befestigung der schlauchförmigen Folie an der Befestigungseinrichtung durch den seitlichen Eingriffsabschnitt hindurch in den Grundkörper eingreifen kann, um einen von einem vorangehenden Behälter stammenden Folienrest, der auch an der Befestigungseinrichtung befestigt ist und der von der schlauchförmigen Folie eingeschlossen ist, zu entfernen.*

*Erfindungsgemäß ist in dem seitlichen rigiden Eingriffsabschnitt ein Abfallanschluss ausgebildet, der den rigiden Eingriffsabschnitt seitlich durchbricht und an dem ein Abfallbehälter befestigt werden kann, in den der Anwender den entfernten Folienrest durch den Abfallanschluss hindurch werfen kann.*

Der Abfallanschluss ermöglicht die Befestigung von Abfallbehältern unterschiedlicher Größen bzw. Fassungsvermögen, sodass eine Vielzahl von Folienresten in den Abfallbehälter geworfen werden kann. Diese Ausgestaltung des rigiden Eingriffsabschnitts macht das Vorsehen eines Folienvorrats an dem seitlichen Eingriffsabschnitt oder das Wechseln von Foliensäcken pro Vorgang entbehrlich.

*Bevorzugt ist der flexible Eingreifschlauch aus einem Handschuh mit einem eine solche Länge aufweisenden Armabschnitt ausgebildet, dass der Anwender den Folienrest manuell greifen kann.*

Der Handschuh und der entsprechende Armabschnitt sind bevorzugt aus einem elastischen und flexiblen Material, beispielsweise einem Elastomer, ausgebildet. Der Handschuh ist so an dem Eingriffsabschnitt befestigt, dass er eine dem Grundkörper abgewandte Öffnung in einen Innenraum des Eingriffsabschnitts abgedichtet verschließt.

*Bevorzugt ist an dem dem Grundkörper abgewandten Ende des Eingriffsabschnitts ein Befestigungsmechanismus zum lösbaren Befestigen des flexiblen Eingreifschlauchs, insbesondere des Handschuhs, ausgebildet.*

Der Befestigungsmechanismus für den Eingreifschlauch ist beispielsweise eine Klemmeinrichtung, insbesondere ein mittels Schrauben befestigter Ring, der den Eingreifschlauch, insbesondere den Armabschnitt des Handschuhs, klemmend hält.

*Weiterhin bevorzugt weist der Abfallanschluss einen Befestigungsmechanismus zum lösbaren Befestigen des Abfallbehälters auf.* Bevorzugt ist *der Abfallbehälter ein flexibler, aus einem Kunststoffmaterial gebildeter Abfallsack und der Befestigungsmechanismus des Abfallanschlusses ist bevorzugt eine Klemmeinrichtung, insbesondere ein Ring mit Blähdichtung oder eine Sackklemme oder ein O-Ring.*

*An dem Abfallanschluss ist der Abfallbehälter befestigt, wobei der Abfallbehälter, insbesondere der Abfallsack, ein Fassungsvermögen für mindestens X Folienreste hat, wobei X = 20, 25, 30, 35, 40, 45, 50, 55, 60, 65, 70, 75, 80, 85, 90, 95, oder 100 ist.* Hieraus wird ersichtlich, dass der an dem Abfallanschluss befestigte Abfallbehälter, insbesondere der Abfallsack, sehr große Vorteile gegenüber dem aus dem Stand der Technik bekannten Folienvorrat aufweist, weil mit dem bekannten Folienvorrat - gegenüber der Erfindung - nur eine sehr viel geringere Anzahl an Behältern gehandhabt werden kann, bevor ein neuer Folienvorrat an dem seitlichen Eingriffsabschnitt unter nicht unerheblichem Zeitaufwand befestigt werden muss.

Auch erhöht die Erfindung die Taktzeiten gehandhabter Behälter pro Zeiteinheit erheblich, weil es nicht, wie bei dem aus dem Stand der Technik bekannten Folienvorrat, notwendig ist, pro Behälter aus dem Folienvorrat einen Eingreifschlauch zu bilden bzw. herauszuziehen und zu bestimmten Zeitpunkten den Eingreifschlauch abbinden und durchtrennen zu müssen.

Bevorzugt kann die erfindungsgemäße Vorrichtung eine Verdichtungseinrichtung aufweisen, die eingerichtet ist, die in dem Abfallbehälter vorhandenen Folienreste zu verdichten, um das Fassungsvermögen des Abfallbehälters zu optimieren.

*Bevorzugt beinhaltet der Eingriffsabschnitt an einem dem Grundkörper zugewandten Ende ein Absperrorgan, das einen Innenraum des Eingriffsabschnitts von dem Kanal des Grundkörpers räumlich trennt.*

*Bevorzugt kann das Absperrorgan über den Eingreifschlauch in dem Innenraum geöffnet und anschließend wieder geschlossen werden. Das Absperrorgan hat bevorzugt eine in dem Innenraum zugängliche Verriegelung, die zum Öffnen und Schließen des Absperrorgans in dem Innenraum manuell betätigbar ist.*

Alternativ bevorzugt kann das Absperrorgan *durch eine außerhalb der Vorrichtung bzw. des Innenraums des Eingriffsabschnitts stattfindende Betätigung für das Entfernen des Folienrestes geöffnet und anschließend wieder geschlossen werden.*

Beispielsweise kann das Absperrorgan eine einfache drehbar gelagerte Klappe sein, die in dem Innenraum manuell oder durch die außerhalb der Vorrichtung stattfindende Betätigung geöffnet und anschließend wieder geschlossen werden kann.

*Beispielsweise beinhaltet der Eingriffsabschnitt bevorzugt an einem dem Grundkörper zugewandten Ende das Absperrorgan, das den Innenraum des Eingriffsabschnitts von dem Kanal des Grundkörpers räumlich trennt, und eine Betätigungseinrichtung, die für einen Anwender außerhalb des Eingriffsabschnitts zugänglich ist und über die der Anwender das Absperrorgan öffnen und schließen kann.*

Die Betätigungseinrichtung ist beispielsweise ein für den Anwender außerhalb des Eingriffsabschnittes zugänglicher Hebel, über den das Absperrorgan, beispielsweise die Verschließklappe, um eine Achse verschwenkbar ist.

Alternativ zu der genannten Klappe kann das Absperrorgan ein in dem Kanal koaxial angeordnetes Rohr sein, das beispielsweise eine dem Eingriffsabschnitt entsprechende Öffnung aufweist, die durch Rotation des Rohrs um die Kanalachse mit dem Eingriffsabschnitt in Überlappung gebracht (geöffneter Zustand) oder von dem Eingriffsabschnitt versetzt werden kann (geschlossener Zustand). Das Rohr kann alternativ axial zur Kanalachse versetzbar sein, um den Innenraum des Eingriffsabschnitts von dem Kanal räumlich zu trennen oder zu öffnen. In diesem Fall ist die Öffnung in dem Rohr nicht notwendig.

Weiterhin alternativ kann das Absperrorgan ein in dem Kanal angeordneter Schlauch sein, der in Richtung der Kanalachse, in Bezug auf eine bestimmungsgemäße Strömungsrichtung des Produktes stromaufwärts, versetzt zu dem Eingriffsabschnitt, befestigt ist und sich in Strömungsrichtung soweit erstreckt, dass er den Eingriffsabschnitt abdeckt. Der Anwender kann bei dieser Ausgestaltung des Absperrorgans den Schlauch manuell wegschieben - wie einen Vorhang -, um Zugang in den Kanal zu bekommen und den Folienrest entfernen zu können.

Letztendlich kann das Absperrorgan ein Stoßelement sein, das der Anwender bestimmungsgemäß von Außerhalb in den Eingreifschlauch/Handschuh und mit diesem zusammen soweit in den Innenraum des Eingriffsabschnitts einführt, dass das Stoßelement mittelbar über den Eingreifschlauch/Handschuh den Übergang zwischen Kanal und Innenraum des Eingriffsabschnitts verschließt und bevorzugt abdichtet. In diesem Zustand hängt ein Teil des Eingreifschlauches bzw. des Handschuhs in den Kanal.

Besonders bevorzugt weist das Stoßelement einen Verriegelungsabschnitt auf, den der Anwender bestimmungsgemäß an dem dem Grundkörper abgewandten Ende des Eingriffsabschnitts vor dem Überführen des pulver-/granulatförmigen Produktes verriegelt und fixiert. Die Verrieglung stellt sicher, dass das Stoßelement bei dem Überführen des Produktes ortsfest bleibt und nicht in den Innenraum des Eingriffsabschnitts zurückgedrückt wird.

Bevorzugt kann das Stoßelement einen Verstellmechanismus aufweisen, der es ermöglicht, den Eingreifschlauch/Handschuh weiter in Richtung des Kanals zu drücken, nachdem das Stoßelement über den Verriegelungsabschnitt an dem genannten Ende des Eingriffsabschnitts fixiert ist.

Beispielsweise kann der Verstellmechanismus einen Endabschnitt des Stoßelementes, das dem Kanal zugewandt ist, in Richtung des Kanals bewegen und wieder zurückziehen.

Hierdurch kann der Anwender das Stoßelement einfach und bequem mit dem Verriegelungsabschnitt fixieren, ohne gegen Widerstände des Eingreifschlauches/Handschuhs arbeiten zu müssen. Erst anschließend kann der Anwender das Stoßelement soweit in den Eingriffsabschnitt einführen, dass der Übergang zwischen Kanal und Innenraum verschlossen ist, indem er den Verstellmechanismus derart betätigt, dass der Endabschnitt des Stoßelementes in Richtung des Übergangs versetzt wird.

Die Betätigung erfolgt beispielsweise über einen für den Anwender Außen zugänglichen Hebel.

Im Folgenden wird eine bevorzugte Ausführungsform der Erfindung anhand der beigefügten Figuren erläutert.
**Fig. 1** **und** **2** zeigen eine erfindungsgemäße Vorrichtung zum Befüllen und/oder Entleeren von Behältern in einer perspektivischen Ansicht.
**Fig. 3** **und** **4** zeigen die erfindungsgemäße Vorrichtung in einer Schnittansicht, wobei die entsprechende Schnittebene horizontal verläuft bzw. senkrecht zu einer Kanalachse eines Kanals der Vorrichtung.
Fig. 5 (a) - (f) zeigen schematisch einzelne Verfahrensschritte bei Benutzung der erfindungsgemäßen Vorrichtung.
**Fig. 6** **und** **7** zeigen eine weitere bevorzugte Ausführungsform der erfindungsgemäßen Vorrichtung.

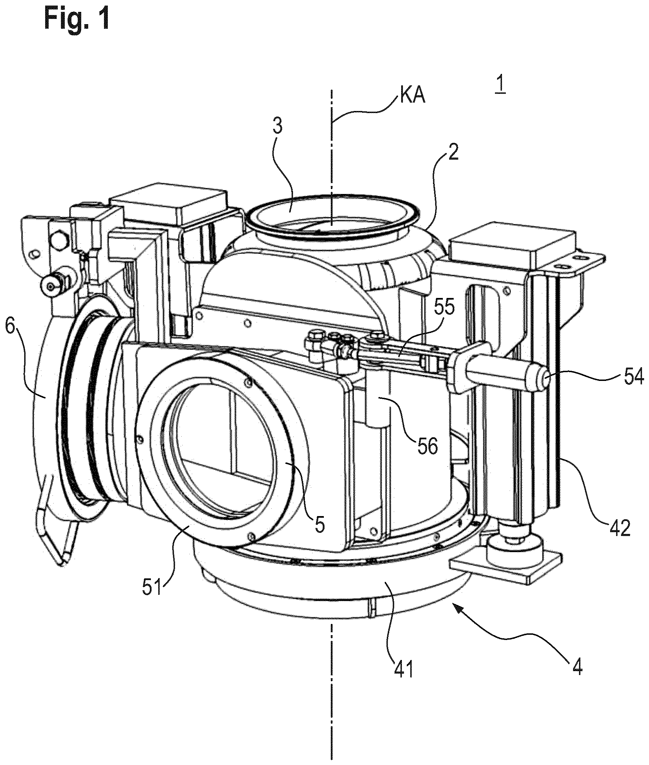

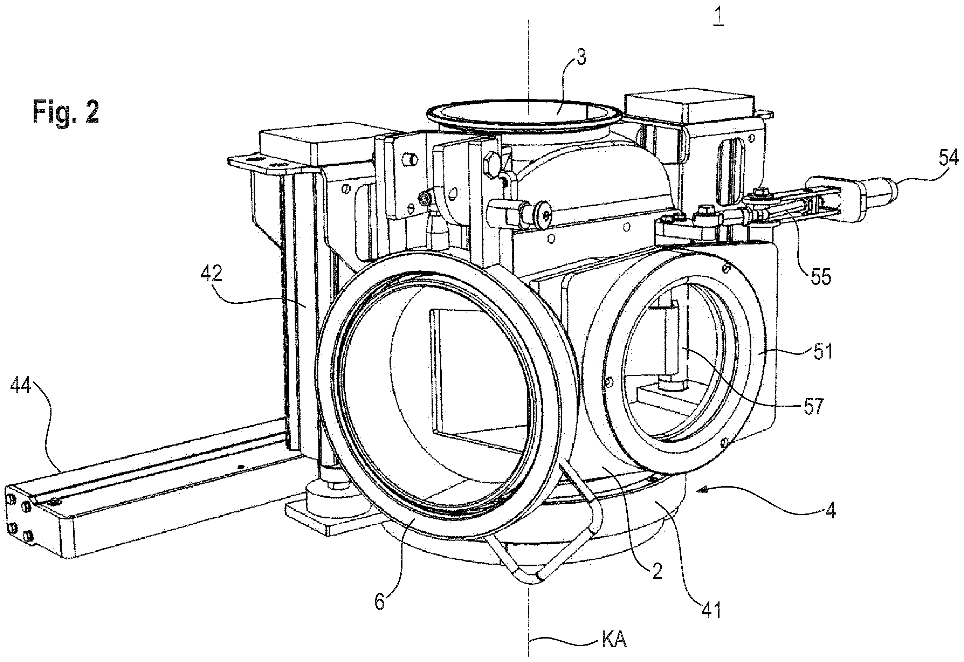

Die beigefügten Figuren 1 und 2 zeigen eine erfindungsgemäße Vorrichtung 1 zum Befüllen von Behältern mit einem pulver-/granulatförmigen Produkt.

Figur 1 und Figur 2 ist jeweils eine perspektivische Ansicht der Vorrichtung 1, die einen Grundkörper 2, in dem ein Kanal 3 ausgebildet ist, eine Befestigungseinrichtung 4, einen seitlichen rigiden Eingriffsabschnitt 5 und einen Abfallanschluss 6 als Wesentliche Elemente aufweist.

Der Grundkörper 2 wird an seinem in Figur 1 bzw. Figur 2 gezeigten oberen Ende bestimmungsgemäß in eine Prozessanlage integriert, derart, dass ein in der Prozessanlage vorhandenes pulver-/granulatförmiges Produkt durch die in Figuren 1 und 2 gezeigte obere Öffnung hindurch in den den Grundkörper 2 durchlaufenden Kanal 3 eintreten kann.

Der Grundkörper 2 besitzt an seinem unteren Ende eine weitere Öffnung, durch die hindurch das Produkt aus dem Kanal 3 austreten kann.

Der Grundkörper 2 kann aus Kunststoff oder bevorzugt einem Metall ausgebildet sein.

Die erfindungsgemäße Vorrichtung 1 beinhaltet eine Befestigungseinrichtung 4, die an dem unteren Ende des Grundkörpers 2 angeordnet ist und diesen umläuft. Die Befestigungseinrichtung 4 ermöglicht die Befestigung einer nicht gezeigten Schlauchfolie, die integraler Bestandteil des zu befüllenden Behälters (beispielsweise Bigbag) ist oder als Überbrückung zwischen Vorrichtung 1 und entsprechendem Behälter (beispielsweise Fass) dient.

Die Befestigungseinrichtung 4 weist einen Klemmring 41 auf, der an zwei seitlichen Hubzylindern 42 befestigt ist und hierdurch in Richtung einer Kanalachse KA des Kanals 3 an den Grundkörper 2 herangefahren und von diesem wieder entfernt werden kann. Des Weiteren beinhaltet die Befestigungseinrichtung 4 einen Klemmraum 43, der das untere Ende des Grundkörpers 2 umläuft und sich in Figuren 1 und 2 unter dem Klemmring 41 befindet.

Die genaue Ausgestaltung der Befestigungseinrichtung 4 kann variiert werden, soweit sie die Funktion behält, einen von einem vorangehenden Behälter stammenden Folienrest und die Schlauchfolie eines zu befüllenden Behälters gleichzeitig abgedichtet zu halten. Die Befestigungseinrichtung 4 kann diesbezüglich beispielsweise aufgebaut sein, wie sie in den Patentdokumenten DE 10 2017 212 510 A1 oder DE 10 2006 057 760 B3 beschrieben ist. Die Funktion der Befestigungseinrichtung 4 wird im Folgenden noch erläutert werden.

Zusätzlich beinhaltet die Vorrichtung 1 den seitlichen Eingriffsabschnitt 5, der einen Innenraum bzw. Durchgang definiert, über den der Anwender in den Kanal 3 des Grundkörpers 2 manuell eingreifen kann. Der Eingriffsabschnitt 5 ist allgemein quer zur Kanalachse KA, bevorzugt senkrecht zur Kanalachse KA, ausgerichtet. Ein Befestigungsmechanismus 51 ist an dem distalen, dem Grundkörper 2 abgewandten Ende des Eingriffsabschnitts 5 vorgesehen.

Ein in Figuren 1 und 2 nicht gezeigter Eingreifschlauch wird bestimmungsgemäß mittels des Befestigungsmechanismus 51 an dem Eingriffsabschnitt 5 befestigt. Der Eingreifschlauch ist bevorzugt aus einem flexiblen und bevorzugt elastischen Kunststoffmaterial ausgebildet und verschließt die in Figuren 1 und 2 gezeigte Öffnung des Eingriffsabschnitts 5 an dem dem Grundkörper 2 abgewandten, distalen Ende des Eingriffsabschnitts 5.

Bestimmungsgemäß dient der Eingreifschlauch dazu, dass der Anwender seinen Arm in den Eingreifschlauch und durch den Innenraum bzw. Durchgang des Eingriffsabschnitts 5 hindurch in den Kanal 3 einführen und dort den bereits erwähnten Folienrest ergreifen und in den Innenraum des Eingriffsabschnitts 5 ziehen kann.

Dieser Schritt wird weiter unten noch näher erläutert. Der Eingreifschlauch ist bevorzugt als Handschuh 52 ausgebildet, der einen Armabschnitt mit einer solchen Länge hat, dass der Anwender den Folienrest problemlos erreichen kann.

Der Abfallanschluss 6 ist seitlich an dem Eingriffsabschnitt 5 ausgebildet und durchbricht diesen senkrecht zur Längsachse des Innenraums des Eingriffsabschnitts 5.

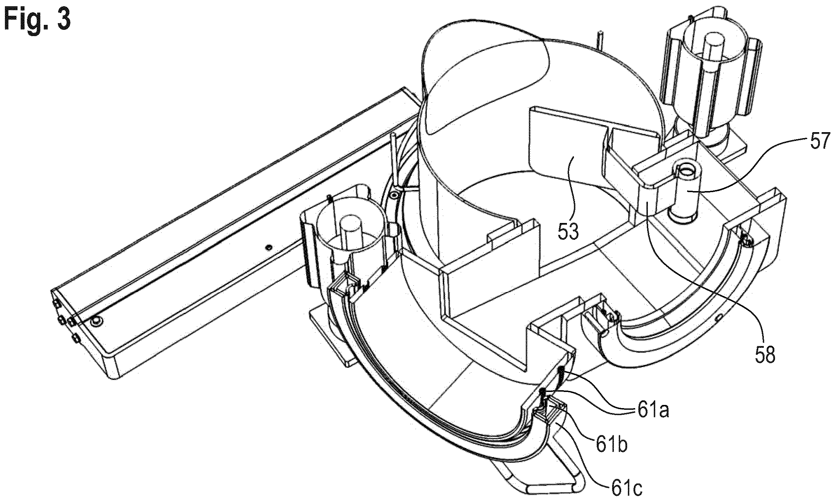

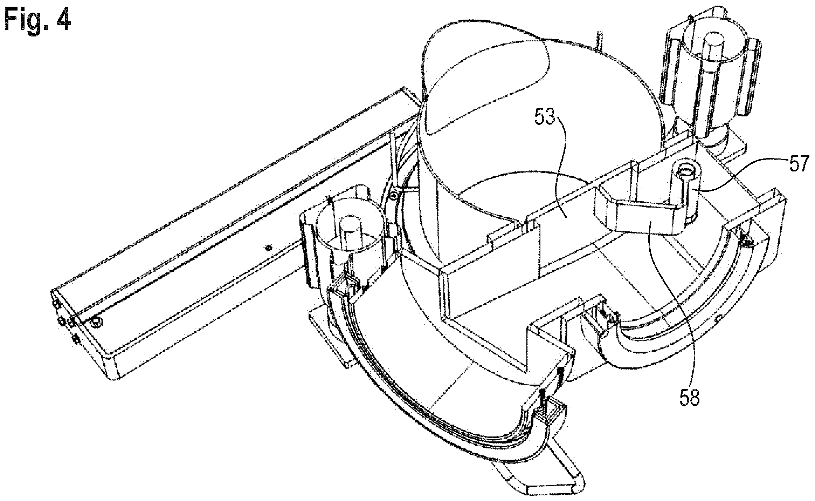

Der Abfallanschluss 6 weist ebenfalls einen Befestigungsmechanismus 61 auf, der es ermöglicht, einen in Figuren 1 und 2 nicht gezeigten Abfallbehälter zu befestigen. Der Befestigungsmechanismus 61 ist in den Figuren 3 und 4 besser zu erkennen und besitzt zum einen zwei Nuten 61a, die auf einer Außenoberfläche des Abfallanschlusses 6 ausgebildet sind, und zum anderen einen mit einer Blähdichtung 61b ausgestatteten Klemmring 61c.

Die zwei Nuten 61a dienen zum kontaminationsfreien Wechseln des genannten Abfallbehälters und der Klemmring 61c bzw. die entsprechende Blähdichtung 61b zur sicheren Fixierung des Abfallbehälters während der bestimmungsgemäßen Benutzung der Vorrichtung 1.

Der Abfallbehälter ist bevorzugt ein flexibler Abfallsack, der mittels des Befestigungsmechanismus 61 festgeklemmt wird, derart, dass durch den Abfallanschluss 6 hindurch Folienreste in den Abfallsack geworfen werden können.

Der Befestigungsmechanismus 61 kann alternativ beispielsweise eine Sackklemme mit einem Spannhebel oder ein einfacher O-Ring sein. Allgemein ist der Befestigungsmechanismus 61 so ausgestaltet, dass ein kontaminationsfreier Wechsel des Abfallbehälters möglich ist.

Die Ausrichtung des Abfallanschlusses 6 ist in Figur 1 senkrecht zur Längsachse des Eingriffsabschnitts 5 und auch senkrecht zur Kanalachse KA des Kanals 3. Mit anderen Worten ist der Abfallanschluss 6 horizontal zur Seite des Eingriffsabschnitts 5 ausgerichtet. Die Ausrichtung kann variieren, beispielsweise kann die Längsachse des Abfallanschlusses 6 nach unten weisen, d. h. senkrecht zur Längsachse des Eingriffsabschnitts 5 und parallel zur Kanalachse KA des Kanals 3.

Die Figuren 3 und 4 zeigen die erfindungsgemäße Vorrichtung 1 in einer Schnittansicht, wobei die entsprechende Schnittebene senkrecht zur Kanalachse KA ausgerichtet ist und in Richtung der Kanalachse KA gesehen ungefähr in der Mitte des Eingriffsabschnittes 5 und des Abfallanschlusses liegt.

Die erfindungsgemäße Vorrichtung 1 beinhaltet ferner ein Absperrorgan 53, das den Innenraum des Eingriffsabschnitts 5 von dem Kanal 3 des Grundkörpers 2 (räumlich) trennt.

Das Absperrorgan 53 ist beispielsweise eine Verschließklappe bzw. Klappe, die der Anwender bevorzugt über einen auf der Außenseite der Vorrichtung 1 zugänglichen Hebel 54 öffnen und schließen kann. Der Hebel 54 ist in Figuren 1 und 2 gut ersichtlich.

Der Hebel 54 ist ein bevorzugt manuell zu betätigender Hebel, der an seinem in Figuren 1 und 2 gezeigten distalen Ende einen Griff besitzt. Der Hebel 54 ist an seinem, dem Eingriffsabschnitt 5 zugewandten Ende an einer parallel zur Kanalachse KA verlaufenden Welle 56 drehbar gelagert und mittelbar, über einen weiteren Hebelarm 55, mit einer weiteren Welle 57 verbunden.

Die weitere Welle 57 ist parallel zur Kanalachse KA ausgerichtet und durchbricht den Eingriffsabschnitt 5 und ist in dem entsprechenden Innenraum drehbar gelagert.

Ein Verbindungsarm 58 haltert einerseits die genannte Klappe 53 und ist andererseits an der weiteren Welle 57 befestigt.

Wenn der Anwender den Hebel 54 an dem entsprechenden Griff greift und um die Welle 56 schwenkt, dreht der weitere Hebelarm 55 die weitere Welle 57, wodurch die Klappe 53 über den Verbindungarm 58 von dem in Figur 4 gezeigten (geschlossenen) Zustand in den in Figur 3 gezeigten (geöffneten) Zustand versetzt wird.

Mit anderen Worten kann der Anwender über den Hebel 54 das Absperrorgan in Form der Klappe 53 öffnen und schließen.

Die vorliegende Ausführungsform ist nicht auf die gezeigte Ausgestaltung des Absperrorgans 53 und dessen Betätigung mittels Hebel 54 eingeschränkt.

Die Erfindung kann auch ohne Hebel 54 realisiert werden.

Beispielsweise kann das Absperrorgan eine lediglich drehbar gelagerte Klappe sein, die der Anwender bei Eingreifen in dem Innenraum des Eingriffsabschnitts 5 öffnen und schließen kann. Hierfür kann das Absperrorgan zudem mit einem Schloss zur Verriegelung ausgestaltet sein, das der Anwender in dem Innenraum des Eingriffsabschnitts 5 zum Entriegeln und Verriegeln betätigen kann.

Das Absperrorgan verschließt unabhängig von seiner genauen Ausgestaltung den Eingriffsabschnitt auf der Seite des Kanals 3 bevorzugt bündig mit einer Innenoberfläche des Kanals 3.

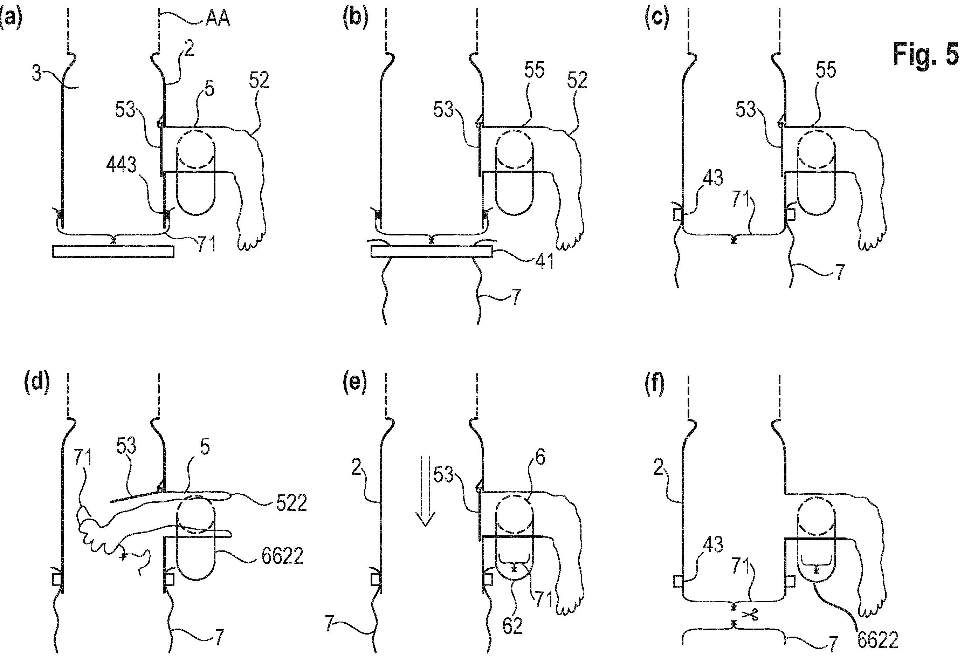

Im Folgenden wird die bestimmungsgemäße Benutzung der erfindungsgemäßen Vorrichtung 1 unter Bezug auf Figur 5 erläutert werden. Figur 5 zeigt die Vorrichtung 1 lediglich schematisch.

Die erfindungsgemäße Vorrichtung 1 wird bestimmungsgemäß in Zyklen der Schritte (a)-(f) aus Figur 5 zum Befüllen von Behältern, wie beispielsweise Bigbags oder Fässer, benutzt. D. h. die Vorrichtung 1 kehrt nach dem im Folgenden noch beschriebenen Schritt (f) zu Schritt (a) aus Figur 5 zurück.

Die Vorrichtung 1 ist in Figur 5 in eine angedeutete Prozessanlage A integriert bzw. das obere Ende des Grundkörpers 2 ist an der Prozessanlage A derart befestigt, dass ein in der Prozessanlage A vorhandenes pulver-/granulatförmiges Produkt durch den Kanal 3 hindurch geleitet werden kann.

Das untere Ende des Grundkörpers 2 ist in Figur 5 (a) durch einen Folienrest 71 verschlossen. Dieser Folienrest 71 stammt von einem vorangehend befüllten Behälter. Die Befestigung des Folienrestes 71 erfolgt in dem Klemmraum 43, wobei die entsprechende Klemmung bevorzugt gasdicht ist und ein Anwender mit in dem Kanal 3 vorhandenen Rückständen des Produktes nicht in Kontakt kommen kann. Gleichermaßen können auch keine Partikel von außen über die Klemmung in den Kanal 3 gelangen.

Der Klemmring 41 der Befestigungseinrichtung 4 ist in Figur 5 (a) nach unten gefahren bzw. von dem unteren Ende des Grundkörpers 2 entfernt. Die Hubzylinder 42 sind aus Gründen der Übersichtlichkeit nicht gezeigt.

Der zu befüllende Behälter ist in Figur 5 (b) beispielsweise ein Bigbag, wobei eine schlauchförmige Folie 7, die integraler Bestandteil des Bigbags ist und den Einlass in den Bigbag bildet, schematisch gezeigt ist. Der Anwender führt die schlauchförmige Folie 7 durch den Klemmring 41 hindurch und schlägt sie über dessen Rand.

Anschließend fährt der Anwender den Klemmring 41 durch Betätigung der Hubzylinder 41 nach oben, wodurch die schlauchförmige Folie 7 über den Folienrest 71 gestülpt wird und diesen einschließt.

Dieser Zustand ist in Figur 5 (c) gezeigt.

Der Klemmring 41 drückt die schlauchförmige Folie 7 in diesem Zustand in Längsrichtung des Kanals oberhalb des Folienrestes 71 an die Außenoberfläche des Grundkörpers 2, derart, dass eine Abdichtung stattfindet.

Der Anwender löst dann die Befestigung des Folienrestes 71, indem er den Klemmraum 43 entsprechend betätigt, beispielsweise durch Entspannen einer entsprechenden Blähdichtung oder Lösen einer Klemmung.

Der Anwender führt nunmehr, wie in Figur 5 (d) gezeigt, seinen Arm in den am Eingriffsabschnitt 5 befestigten Eingreifschlauch 52, der als Handschuh mit einem langen Armabschnitt ausgebildet ist, ein und ergreift den Folienrest 71. Vorher oder hierbei öffnet der Anwender das Absperrorgan 53 durch Betätigung des Hebels 54 oder manuell innerhalb des Innenraums des Eingriffsabschnitts 5 durch Entriegelung des Schlosses.

Nach Abziehen bzw. Entfernen des Folienrestes 71 aus dem Klemmraum 43 zieht der Anwender den Arm zurück, verschließt das Absperrorgan 53 und wirft den Folienrest 71 durch den Abfallanschluss 6 hindurch in den entsprechend befestigten Abfallsack 62 (siehe Figur 5 (e)).

Die Vorrichtung 1 ist nunmehr in dem Zustand, in dem die schlauchförmige Folie 7 abgedichtet an dem Grundkörper 2 befestigt wird. Dies geschieht durch Aktivierung einer Zugvorrichtung 44 (siehe Figur 2), die die Folie 7 in den Klemmraum 43 zieht, wo sie abgedichtet festgeklemmt wird.

Der Anwender füllt nunmehr das Produkt in den Behälter.

Dieser Zustand ist ebenfalls in Figur 5 (e) gezeigt.

Nach Überführung einer gewünschten Menge des Produktes in den Behälter, beendet der Anwender den Produktfluss und schnürt die schlauchförmige Folie unterhalb des unteren Endes des Grundkörpers 2 zusammen (Fig. 5(f)). Dies erfolgt beispielsweise mit Kabelbindern. Um den gefüllten Behälter nunmehr entfernen zu können, durchtrennt der Anwender die schlauchförmige Folie 7 zwischen den Kabelbindern.

Die Vorrichtung 1 kehrt damit in den in Fig. 5 (a) gezeigten Zustand zurück.

Der an dem Abfallanschluss 6 befestigte Abfallbehälter 62 ist in Figur 5 ein Abfallsack 62 moderater Größe, wobei ein einzelner Folienrest 71 in Figur 5 (e) und (f) in dem Abfallsack 62 vorhanden ist. Der Abfallsack 62 kann sehr viel größer ausgebildet sein und ein Fassungsvermögen für beispielsweise 100 Folienresten aufweisen.

Der Abfallsack 62 wird prinzipiell in einer ähnlichen Art und Weise wie die schlauchförmige Folie 7 gewechselt.

Wenn der Abfallsack 62 gefüllt ist, löst der Anwender den Klemmring 61 durch Entspannen der entsprechenden Blähdichtung, bindet der Anwender den Abfallsack in der Nähe des Abfallanschlusses 6 wiederum mit zwei Kabelbindern ab und durchtrennt den Abfallsack zwischen den abgebundenen Stellen.

Anschließend stülpt der Anwender einen neuen Abfallsack 62 über den am Abfallanschluss 6 befestigten Abfallsackrest und befestigt ihn entsprechend an der inneren der erläuterten Nuten 61a.

Den Abfallsackrest löst der Anwender über den Handschuh, indem er durch den Innenraum des Eingriffsabschnitt 5 hindurch den Abfallsackrest ergreift, löst und in den Abfallsack 62 wirft. Anschließend fixiert er den neuen Abfallsack 62 mittels des Klemmrings 61c.

Die Vorrichtung 1 kann auch zum Entleeren von Behältern dienen. In diesem Fall ist die Vorrichtung 1 um 180° gedreht und der zu entleerende Behälter oberhalb der Vorrichtung 1 angeordnet. Der entsprechende Ablauf ist mit dem dargestellten dann fast gleich, mit dem geringfügigen Unterschied, dass in Figur 5 b) die schlauchförmige Folie 7 des zu entleerenden Behälters verschlossen/zusammengeschnürt ist und in Figur 5e) geöffnet wird.

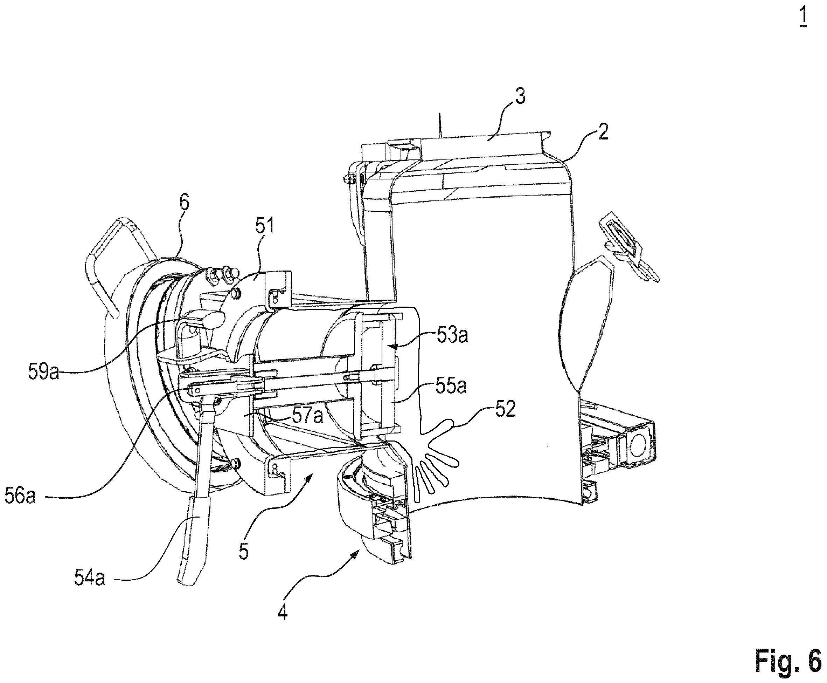

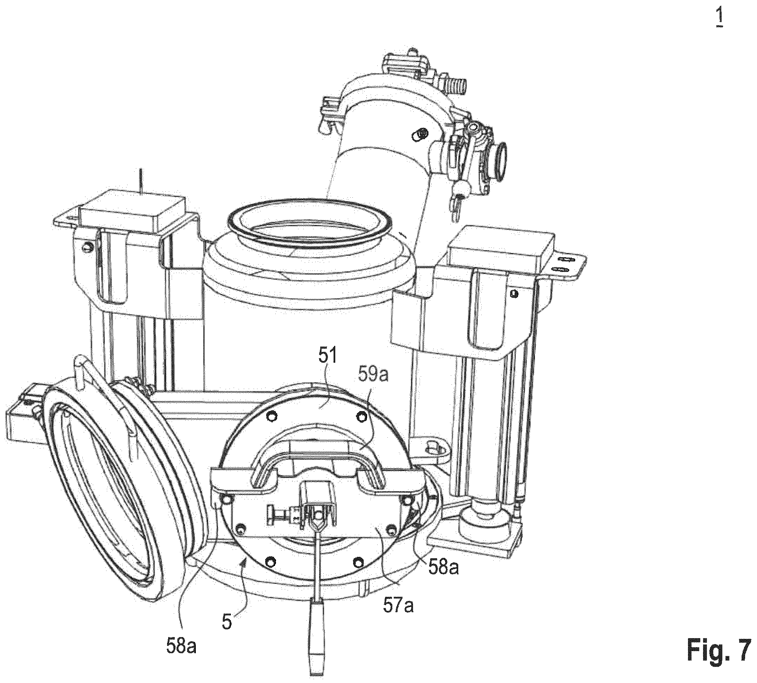

Im Folgenden wird unter Bezug auf Figuren 6 und 7 eine weitere bevorzugte Ausführungsform der erfindungsgemäßen Vorrichtung 1 erläutert. Elemente, die mit denen der im Vorhergehenden erläuterten Ausführungsform identisch sind, tragen identische Bezugszeichen und werden nicht erneut erläutert.

Figur 6 ist eine Schnittansicht der Vorrichtung 1, wobei die Kanalachse KA des Kanals 3 in der Schnittebene liegt.

Figur 7 ist eine perspektivische Ansicht der Vorrichtung 1, die eine Draufsicht auf den Eingriffsabschnitt 5 zeigt.

Der wesentliche Unterschied zwischen der weiteren Ausführungsform gemäß Figuren 6 und 7 und der im Vorhergehenden erläuterten Ausführungsform besteht in der Ausgestaltung des Absperrorgans des Eingriffsabschnitts 5.

Das Absperrorgan ist in dieser bevorzugten weiteren Ausführungsform ein Stoßelement 53a, das den Handschuh 52 bestimmungsgemäß in den Kanal 3 stößt.

Das Stoßelement 53a beinhaltet als wesentliche Elemente:
einen Endabschnitt 55a, der bestimmungsgemäß den Übergang zwischen Innenraum des Eingriffsabschnitts 5 und Kanal 3, wie es im Folgenden noch erläutert werden wird, mittelbar über den Handschuh 52 verschließt,
einen Verriegelungsabschnitt 57a, über den der Anwender das Stoßelement 53a an dem Eingriffsabschnitt 5 befestigen/verriegeln kann, und
einen Verstellmechanismus 56a.

Die Figuren 6 und 7 zeigen das Stoßelement 53a im montierten Zustand.

Das Stoßelement 53a ist in diesem Zustand von außen in den Handschuh 52 eingeführt, wobei der Endabschnitt 55a den Übergang zwischen Innenraum des Eingriffsabschnitts 5 und Kanal 3 verschließt. Insbesondere verschließt der Endabschnitt 55a den Übergang mittelbar über den Handschuh 52. Der Handschuh 52 ist bevorzugt aus einem Elastomer ausgebildet und wirkt wie eine Dichtung zwischen dem Endabschnitt 55a des Stoßelements 53a und einer Innenwand des Übergangs zwischen Innenraum des Eingriffsabschnitts 5 und Kanal 3. Der Handschuh 52 ist lediglich schematisch gezeigt.

Wie aus Figur 6 ersichtlich ist, verschließt der Endabschnitt 55a den Übergang mittelbar über den Armabschnitt des Handschuhs 52, wobei der restliche Handschuh 52, insbesondere der Handabschnitt, in den Kanal 3 hängt.

Das Stoßelement 53a ist auf der dem Grundkörper 2 abgewandten Seite mit dem Verriegelungsabschnitt 57a an dem entsprechenden Ende des Eingriffsabschnitts 5 befestigt. Hierfür beinhaltet der Verriegelungsabschnitt 57a, wie in Figur 7 ersichtlich, zwei Haken 58a, die mit zwei an dem Befestigungsmechanismus 51 ausgebildeten Bolzen ineinandergreifen.

Die Bolzen haben im Vergleich zu den Haken 58a vergrößerte Köpfe, die dafür sorgen, dass nach dem Einhängen der Haken 58a das Stoßelement 53a ortsfest bleibt und nicht aus dem Eingriffsabschnitt 5 gedrückt werden kann. Die Köpfe wirken ergo wie Gegenlager.

Um das Befestigen oder Lösen des Stoßelementes zu erleichtern, besitzt der Verriegelungsabschnitt 57a einen Griff 59a, an dem der Anwender das Stoßelement 58a halten und bewegen kann.

Der Verstellmechanismus 56a des Stoßelementes 53a dient zur besseren Handhabung des Stoßelements 53a, insbesondere zum leichteren Einsetzen und Lösen des Stoßelementes 53a.

Das wird im Folgenden erläutert.

Wenn das Stoßelement 53a montiert ist (Figur 6) und in den Eingriffsabschnitt 5 eingeführt ist, und der Anwender beabsichtigt, das Stoßelement 53a herauszuziehen, betätigt er den Verstellmechanismus 56a, bevorzugt über den Hebel 54a, derart, dass der Endabschnitt 55a zurückgezogen wird, d.h. in Richtung des Verriegelungsabschnitts 57a, und den mittelbar über den Handschuh hergestellten Verschluss des Übergangs zwischen Innenraum des Eingriffsabschnitts 5 und Kanal 3 löst.

Anschließend kann der Anwender den Verriegelungsabschnitt 57a lösen, indem er das Stoßelement 53a über den Griff 59a anhebt und die Haken 58a aus den Bolzen aushängt.

Hiernach zieht der Anwender das Stoßelement 53a vollständig aus dem Eingriffsabschnitt 5 heraus, wodurch der Handschuh 52 für den Anwender zugänglich wird.

Das Einsetzen des Stoßelementes 53a erfolgt in umgekehrter Reihenfolge.

Zuerst greift der Anwender den Griff 59a und führt das Stoßelement 53a in den Innenraum des Eingriffsabschnitts 5 soweit ein, dass er die Haken 58a des Verriegelungsabschnitts 57a in die Bolzen einhängen kann. In dem erreichten Zustand hat der Endabschnitt 55a den Handschuh 52 weitgehend in den Kanal 3 gestoßen.

Hiernach betätigt der Anwender den Hebel 54a derart, dass der Endabschnitt 55a weiter in Richtung des Kanals 3 bewegt wird, wobei der Endabschnitt 55a den Handschuh 52 weiter in Richtung des Kanals drückt und den Übergang mittelbar über den Handschuh 52 verschließt, bevorzugt abdichtet.

Das Verfahren aus Figur 5 ist im Wesentlichen identisch für die Vorrichtung aus Figuren 6 und 7.

Unterschiedlich sind lediglich die Schritte aus Figur 5 (d) und 5 (e).

In Schritt aus Figur 5 (d) löst der Anwender zuerst das Stoßelement 53a, wie es im Vorhergehenden erläutert wurde, und entfernt anschließend den Folienrest 71, wie es unter Bezug auf Figur 5 (d) beschrieben wurde.

Anschließend in Schritt aus Figur 5 (e) führt der Anwender das Stoßelement 53a in den Eingriffsabschnitt 5 ein, wie es im Vorhergehenden erläutert wurde, wodurch der Übergang zwischen Eingriffsabschnitt 5 und Kanal 3 abgedichtet ist.

Hiernach füllt der Anwender das Produkt in den Behälter, wie es unter Bezug auf Figur 5 (e) bereits beschrieben wurde.

Alle anderen Schritte sind identisch zu Figur 5.

Auch die unter Bezug auf Figuren 6 und 7 beschriebene Vorrichtung 1 lässt sich zum Entleeren von Behältern einsetzen. In diesem Fall ist die Vorrichtung 1 um 180° gedreht und der zu entleerende Behälter oberhalb der Vorrichtung 1 angeordnet. Der entsprechende Ablauf ist mit dem dargestellten dann fast gleich, mit dem geringfügigen Unterschied, dass in Figur 5 (b) die schlauchförmige Folie 7 des zu entleerenden Behälters verschlossen/zusammengeschnürt ist und in Figur 5e) geöffnet wird.

Alle allgemeinen Ausführungen der Erfindung vor der Figurenbeschreibung gelten für die Ausführungsform gleichermaßen.

## Patentansprüche

1. Vorrichtung (1) zum Befüllen und/oder Entleeren eines ein pulver-/granulatförmiges Produkt enthaltenen Behälters (1), wobei die Vorrichtung (1) aufweist:
- einen Grundkörper (2), der einen Kanal (3) ausbildet, wobei der Kanal (3) sich entlang einer Kanalachse erstreckt;
- eine Befestigungseinrichtung (4) zur Befestigung einer schlauchförmigen Folie an dem Grundkörper (2), derart, dass das pulver-/granulatförmige Produkt über den Kanal und die schlauchförmige Folie in und/oder aus dem Behälter kontaminationsfrei überführbar ist; und
- einen seitlichen rigiden Eingriffsabschnitt (5), der an dem Grundkörper (2) ausgebildet ist und sich radial/quer zur der Kanalachse erstreckt, wobei an einem dem Grundkörper (2) abgewandten Ende des Eingriffsabschnittes (5) ein flexibler Eingreifschlauch befestigt ist, über den ein Anwender nach Befestigung der schlauchförmigen Folie an der Befestigungseinrichtung (4) durch den seitlichen Eingriffsabschnitt (5) hindurch in den Grundkörper (2) eingreifen kann, um einen von einem vorangehenden Behälter stammenden Folienrest, der auch an der Befestigungseinrichtung (4) befestigt ist und der von der schlauchförmigen Folie eingeschlossen ist, zu entfernen; **dadurch gekennzeichnet, dass**
in dem seitlichen rigiden Eingriffsabschnitt (5) ein Abfallanschluss (6) ausgebildet ist, der den rigiden Eingriffsabschnitt (5) seitlich durchbricht und an dem ein Abfallbehälter befestigt werden kann, in den der Anwender den entfernten Folienrest durch den Abfallanschluss (6) hindurch werfen kann.

2. Vorrichtung (1) gemäß Patentanspruch 1, wobei der flexible Eingreifschlauch aus einem Handschuh mit einem eine solche Länge aufweisenden Armabschnitt, dass der Anwender den Folienrest manuell greifen kann, ausgebildet ist.

3. Vorrichtung (1) gemäß Patentanspruch 1 oder 2, wobei an dem dem Grundkörper (2) abgewandten Ende des Eingriffsabschnitts (5) ein Befestigungsmechanismus (51) zum lösbaren Befestigen des flexiblen Eingreifschlauchs ausgebildet ist.

4. Vorrichtung (1) gemäß einem der vorangehenden Patentansprüchen 1 bis 3, wobei der Abfallanschluss (6) einen Befestigungsmechanismus (61) zum lösbaren Befestigen des Abfallbehälters aufweist.

5. Vorrichtung (1) gemäß Patentanspruch 4, wobei der Abfallbehälter ein flexibler Abfallsack ist und der Befestigungsmechanismus (61) des Abfallanschlusses (6) eine Klemmeinrichtung, insbesondere ein Ring mit Blähdichtung oder eine Sackklemme oder ein O-Ring, ist.

6. Vorrichtung (1) gemäß einem der vorangehenden Patentansprüchen 1 bis 5, wobei eine Längsachse des Abfallanschlusses (6) rechtwinklig, parallel oder schräg zu der Kanalachse verläuft.

7. Vorrichtung (1) gemäß einem der vorangehenden Patentansprüchen 1 bis 6, wobei an dem Abfallanschluss der Abfallbehälter befestigt ist und ein Fassungsvermögen für mindestens X Folienreste hat, wobei X = 20, 25, 30, 35, 40, 45, 50, 55, 60, 65, 70, 75, 80, 85, 90, 95, oder 100 ist.

8. Vorrichtung (1) gemäß einem der Patentansprüche 1 bis 7, wobei der Eingriffsabschnitt (5) an einem dem Grundkörper (2) zugewandten Ende ein Absperrorgan aufweist, das einen Innenraum des Eingriffsabschnitts (5) von dem Kanal des Grundkörpers (2) trennt und das über den Eingreifschlauch in dem Innenraum oder durch eine außerhalb der Vorrichtung stattfindenden Betätigung für das Entfernen des Folienrestes geöffnet und anschließend wieder geschlossen werden kann.

9. Vorrichtung (1) gemäß Patentanspruch 8, wobei das Absperrorgan eine in dem Innenraum zugängliche Verriegelung aufweist, die zum Öffnen und Schließen des Absperrorgans in dem Innenraum manuell betätigbar ist.

10. Vorrichtung (1) gemäß Patentanspruch 8, wobei das Absperrorgan ein Stoßelement (53a) ist, das der Anwender bestimmungsgemäß von Außerhalb in den Eingreifschlauch (52) und mit diesem zusammen soweit in den Innenraum des Eingriffsabschnitts (5) einführen kann, dass das Stoßelement (53a) mittelbar über den Eingreifschlauch (52) einen Übergang zwischen Kanal (3) und Innenraum des Eingriffsabschnitts (5) verschließt und bevorzugt abdichtet.

11. Vorrichtung (1) gemäß Patentanspruch 10, wobei das Stoßelement (53a) einen Verriegelungsabschnitt aufweist, den der Anwender bestimmungsgemäß an einem dem Grundkörper (2) abgewandten Ende des Eingriffsabschnitts (5) vor dem Überführen des pulver-/granulatförmigen Produktes verriegelt und fixiert.

12. Vorrichtung (1) gemäß Patentanspruch 11, wobei das Stoßelement (53a) einen Verstellmechanismus aufweist, der eingerichtet ist, den Eingreifschlauch (52) weiter in Richtung des Kanals (3) zu drücken, nachdem das Stoßelement (53a) über den Verriegelungsabschnitt an dem Ende des Eingriffsabschnitts (5) fixiert ist.

## Claims

1. An apparatus (1) for filling and/or emptying a container (1) containing a powder/granular product, the apparatus (1) comprising:
- a base body (2) forming a passage (3), the passage (3) extending along a passage axis;
- an attachment device (4) for attaching a tubular film to the base body (2) in such a way that the powder/granular product can be transferred into and/or out of the container via the passage and the tubular film in a contamination-free manner; and
- a lateral rigid access portion (5) formed on the base body (2) and extending radially/transversely to the passage axis, wherein a flexible access tube is attached to an end of the access portion (5) facing away from the base body (2), by means of which, after attaching the tubular film to the attachment device (4), a user can access the base body (2) through the lateral access portion (5) in order to remove a film remnant originating from a preceding container, which is also attached to the attachment device (4) and which is enclosed by the tubular film; **characterized in that**
a waste port (6) is formed in the lateral rigid access portion (5), which laterally breaks through the rigid access portion (5) and to which a waste container can be attached, into which the user can throw the removed film remnant through the waste port (6).

2. The apparatus (1) according to claim 1, wherein the flexible access tube is formed from a glove having an arm portion of such a length that the user can manually grasp the film remnant.

3. The apparatus (1) according to patent claim 1 or 2, wherein an attachment mechanism (51) for releasably attaching the flexible access tube is formed at the end of the access portion (5) facing away from the base body (2).

4. The apparatus (1) according to any of the foregoing claims 1 to 3, wherein the waste port (6) comprises an attachment mechanism (61) for releasably attaching the waste container.

5. The apparatus (1) according to patent claim 4, wherein the waste container is a flexible waste bag and the attachment mechanism (61) of the waste port (6) is a clamping device, in particular a ring with inflatable seal or a bag clamp or an O-ring.

6. The apparatus (1) according to any of the preceding claims 1 to 5, wherein a longitudinal axis of the waste port (6) is perpendicular, parallel or oblique to the passage axis.

7. The apparatus (1) according to any of the foregoing claims 1 to 6, wherein the waste container is attached to the waste port and has a capacity for at least X film remnants, where X = 20, 25, 30, 35, 40, 45, 50, 55, 60, 65, 70, 75, 80, 85, 90, 95, or 100.

8. The apparatus (1) according to any of claims 1 to 7, wherein the access portion (5) has, at an end facing the base body (2), a shut-off member which separates an interior space of the access portion (5) from the passage of the base body (2) and which can be opened via the access tube in the interior space or by an actuation taking place outside the apparatus for the removal of the film remnant and subsequently closed again.

9. The apparatus (1) according to patent claim 8, wherein the shut-off member comprises a latch accessible in the interior and manually operable to open and close the shut-off member in the interior.

10. The apparatus (1) according to patent claim 8, wherein the shut-off member is a pushing member (53a) which the user can introduce as intended from outside into the access tube (52) and together therewith so far into the interior of the access portion (5) that the pushing member (53a) closes and preferably seals a transition between the passage (3) and the interior of the access portion (5) indirectly via the access tube (52).

11. The apparatus (1) according to patent claim 10, wherein the pushing member (53a) has a locking portion which the user locks and fixes as intended at an end of the access portion (5) facing away from the base body (2) before transferring the powder/granular product.

12. The apparatus (1) according to claim 11, wherein the pushing member (53a) has an adjusting mechanism configured to push the access tube (52) further toward the passage (3) after the pushing member (53a) is fixed to the end of the access portion (5) via the locking portion.

## Revendications

1. Dispositif (1) destiné à remplir et/ou vider un récipient (1) contenant un produit pulvérulent/granulaire, dans lequel le dispositif (1) présente :
- un corps principal (2) qui forme un canal (3), dans lequel le canal (3) s'étend le long d'un axe de canal ;
- un équipement de fixation (4) pour fixer une feuille en forme de tuyau contre le corps principal (2), de sorte que le produit pulvérulent/granulaire puisse être transféré exempt de contamination jusque dans le et/ou hors du récipient via le canal et la feuille en forme de tuyau ; et
- une section d'engagement (5) rigide latérale qui est conçue contre le corps principal (2) et s'étend radialement/transversalement par rapport à l'axe de canal, dans lequel un tuyau d'engagement flexible est fixé contre une extrémité, opposée au corps principal (2), de la section d'engagement (5), à travers lequel un utilisateur peut s'engager, après fixation de la feuille en forme de tuyau contre l'équipement de fixation (4), à travers la section d'engagement (5) latérale jusque dans le corps principal (2) pour retirer un résidu de feuille, provenant d'un récipient précédent, qui est également fixé contre l'équipement de fixation (4) et qui est compris dans la feuille en forme de tuyau ;
**caractérisé en ce que**
dans la section d'engagement (5) rigide latérale est conçu un raccordement pour déchets (6) qui perce latéralement la section d'engagement (5) rigide et contre lequel un récipient à déchets peut être fixé dans lequel l'utilisateur peut jeter le résidu de feuille qui a été retiré à travers le raccordement pour déchets (6).

2. Dispositif (1) selon la revendication 1, dans lequel le tuyau d'engagement flexible est conçu comme un gant avec une section de bras présentant une longueur telle que l'utilisateur puisse se saisir manuellement du résidu de feuille.

3. Dispositif (1) selon la revendication 1 ou 2, dans lequel un mécanisme de fixation (51) est conçu contre l'extrémité, opposée au corps principal (2), de la section d'engagement (5) pour fixer le tuyau d'engagement flexible de façon amovible.

4. Dispositif (1) selon l'une des revendications précédentes 1 à 3, dans lequel le raccordement pour déchets (6) présente un mécanisme de fixation (61) pour fixer le récipient à déchets de façon amovible.

5. Dispositif (1) selon la revendication 4, dans lequel le récipient à déchets est un sac à déchets flexible et le mécanisme de fixation (61) du raccordement pour déchets (6) est un équipement de pincement, en particulier un anneau avec un joint gonflable ou une pince de sac ou un joint torique.

6. Dispositif (1) selon l'une des revendications précédentes 1 à 5, dans lequel un axe longitudinal du raccordement pour déchets (6) se déroule de façon perpendiculaire, parallèle ou oblique par rapport à l'axe de canal.

7. Dispositif (1) selon l'une des revendications précédentes 1 à 6, dans lequel le récipient à déchets est fixé contre le raccordement pour déchets et a une capacité de saisie pour au moins X résidus de feuille, dans lequel X est = 20, 25, 30, 35, 40, 45, 50, 55, 60, 65, 70, 75, 80, 85, 90, 95 ou 100.

8. Dispositif (1) selon l'une des revendications précédentes 1 à 7, dans lequel la section d'engagement (5) présente, contre une extrémité tournée vers le corps principal (2), un organe d'arrêt qui sépare un espace intérieur de la section d'engagement (5) et un canal du corps principal (2), et qui peut être ouvert puis à nouveau fermé via le tuyau d'engagement dans l'espace intérieur ou par un actionnement se trouvant à l'extérieur du dispositif pour le retrait du résidu de feuille.

9. Dispositif (1) selon la revendication 8, dans lequel l'organe d'arrêt présente un verrouillage accessible dans l'espace intérieur qui peut être actionné manuellement pour l'ouverture et la fermeture de l'organe d'arrêt dans l'espace intérieur.

10. Dispositif (1) selon la revendication 8, dans lequel l'organe d'arrêt est un élément de poussée (53a) que l'utilisateur peut conformément à sa destination introduire dans le tuyau d'engagement (52) depuis l'extérieur et ensemble avec celui-ci aller loin dans l'espace intérieur de la section d'engagement (5) jusqu'à ce que l'élément de poussée (53a) ferme et de préférence étanchéifie indirectement via le tuyau d'engagement (52) un passage entre le canal (3) et l'espace intérieur de la section d'engagement (5).

11. Dispositif (1) selon la revendication 10, dans lequel l'élément de poussée (53a) présente une section de verrouillage que l'utilisateur verrouille et fixe conformément à sa destination contre une extrémité, opposée au corps principal (2), de la section d'engagement (5) avant le transfert du produit pulvérulent/granulaire.

12. Dispositif (1) selon la revendication 11, dans lequel l'élément de poussée (53a) présente un mécanisme de réglage qui est configuré pour pousser davantage le tuyau d'engagement (52) dans la direction du canal (3), après que l'élément de poussée (53a) eut été fixé contre l'extrémité de la section d'engagement (5) via la section de verrouillage.
